# EUROPEAN PATENT APPLICATION

(11) **EP 2 629 258 A1**
(43) Date of publication of application: **21.08.2013**
(21) Application number: 12155850.6
(22) Date of filing: 16.02.2012
(51) Int. Cl.: G06Q 20/20

(54) **A method of executing a secure card payment transaction**

(71) Applicant: MobiPayPoint Limited, Dooradoyle Limerick (IE)
(72) Inventor: Gormley, Dave, Louth, County (IE)
(74) Representative: O'Connor, Michael Donal

(57) **Abstract**

This invention relates to a method of executing a secure card payment transaction in a system comprising a card payment terminal and a processing server. The card payment terminal has a chip reader and a magnetic strip reader. The card payment terminal reads a primary account number (PAN) from both the magnetic strip and the chip and carries out an EMV1 PIN verification procedure before allowing a payment transaction to proceed, thereby obviating the possibility of certain types of fraudulent attacks. The method according to the present invention does not require additional chip interaction or communication steps to be carried out subsequent to PIN verification (EMV2 steps) and therefore can be performed using the existing Internet payment processing infrastructure and without having to provide dedicated merchant accounts for each terminal owner. Accordingly, both the security and the flexibility of the card payment transaction method is improved.

## Description

### Introduction

This invention relates to a method of executing a secure card payment transaction.

Card payment terminals are commonly used to process credit card payments and debit card payment transactions, hereinafter collectively referred to simply as card payment transactions. In order to process a card payment transaction, the card payment terminal receives payment transaction information including the payment amount and information to identify the account that is to be charged before contacting a remote card network to process the card payment request. The card payment terminals are in some cases used to verify the card ownership of the card holder using so called "Chip and PIN" technology.

Credit cards and debit cards are seen as useful alternatives to cash for the purchase of goods and services. Although the known methods of operating card payment transactions provide a very convenient choice for card owners and vendors alike, there are problems with the known methods. In particular, some of the known methods of card payment transactions are highly susceptible to fraud.

In particular, those transactions that are executed based on payment data retrieved from a magnetic strip on a card are very susceptible to fraud. Under normal operation, the details from the magnetic strip contain information regarding the account that is to be charged. During a transaction, these details are read by a magnetic strip reader of a card payment terminal and sent to a remote card payment network for processing. These types of transactions are susceptible to "skimming" whereby the details on the magnetic strip are covertly recorded by a third party using a magnetic strip reading device and a duplicate card with those same magnetic strip details is subsequently produced and used in card present fraudulent transactions, unbeknownst to the owner of the card.

Various attempts have been made to improve the security of card-present card payment transactions. In some cases the customer is requested to sign a payment slip and according to best practice, the signature on the payment slip is compared to a signature on the reverse of the card as a method of confirming that the person making the purchase is the authorised card owner. In practice, the signature and the card details are rarely compared with each other. Furthermore, this is of little use in those instances where a duplicate card complete with false signature has been provided.

Another attempt at improving the security of the known card-present card payment transactions is the so-called "Chip and PIN" technology whereby an electronic chip is provided on the card with a unique personal identification number (PIN) code stored thereon. The card payment terminal is used in conjunction with the Chip to verify whether a PIN entered by a card holder into the card payment terminal is the same as the PIN stored on the card's chip. These PIN verification steps are often referred to in the art as EMV1 steps where the PIN is verified locally by the card payment terminal. If the PiNs do not correspond with each other, the card payment transaction does not continue further and is terminated. If the PINs do correspond with each other, a communications channel is opened up, facilitated by the card payment terminal between the Chip on the card and a banking facility charged with the task of processing the payment request. The process steps of communication between the Chip and the banking institution to process a payment are commonly referred to in the art as EMV2 steps.

There are however problems with and barriers to using Chip and Pin technology for the purposes of processing a card payment. First of all, in order to be able to process EMV2 steps, the card issuing bank must provide technical facilities to communicate with and process a payment initiated from a customer issued Chip and Pin card and a special merchant account must be set up for the merchant in the banking institution. The requirements for setting up such a merchant account are often onerous and difficult for the merchant to satisfy thereby limiting the opportunities for accepting Chip and Pin card payments. Furthermore, the EMV2 steps lock out any other communication or processing options outside of the card issuing bank and their partners thereby restricting the use of the cards to those jurisdictions where the card issuing bank or their partners have a presence. In addition to the above, EMV2 steps dictate how the terminal interacts with the chip on the card as well as the communication options it must make available. This means that the terminals do not tend to be transportable from one jurisdiction to another as they are often ill-equipped to communicate the cards from other jurisdictions. Furthermore, there are a number of scams aimed at circumventing the security of Chip and PIN technology. For example, it is common for scammers to coat the Chip with nail varnish or the like covering thereby preventing the Chip from being read by a card payment terminal. In most cases, the vendor will presume that it is a perfectly innocent fault with either the card payment terminal or the Chip and it is common for the Chip and PIN requirement will be overridden by the terminal operator. Once overridden, the transaction will be processed on the basis of the details of the magnetic strip only which are fraudulent.

It can be seen therefore that there are a number of technical problems with the known methods of processing card payment transactions. First of all, many of the known methods are relatively insecure. Secondly, attempts at improving the security of the known methods such as by using Chip and PIN EMV2 steps place onerous requirements on both the card issuing banks as well as the merchants and require an expensive infrastructure.

It is an object of the present invention to provide a technical solution that overcomes at least some of the problems with the known methods and provides a useful choice to the consumer.

### Statements of Invention

According to the invention there is provided a method of executing a secure card payment transaction in a system comprising a card payment terminal and a remote processing server,
the card payment terminal comprising a magnetic strip swipe slot and a magnetic strip reader, a chip reading slot and a chip reader, a processor, an accessible memory, a communications module for communications with the remote processing server and a user interface capable of receiving user and operator entered data;
the processing server comprising a processor, an accessible memory and a communications module for communications with the remote card payment terminal; the method comprising the preliminary steps of:
swiping a card to be used in the card payment transaction in the magnetic strip swipe slot and retrieving a primary account number (PAN) from the magnetic strip;
entering the card to be used in the card payment transaction in the chip reading slot and retrieving a PAN from the chip;
comparing the PAN retrieved from the magnetic strip with the PAN retrieved from the chip; and
on the PAN retrieved from the magnetic strip differing from the PAN retrieved from the chip, terminating the card payment transaction, and on the PAN retrieved from the magnetic strip corresponding to the PAN retrieved from the chip, proceeding with the following PIN verification steps of the card payment transaction:
   the card owner entering a Personal Identification Number (PIN) into the card payment terminal, the card payment terminal passing the entered PIN to the chip on the card for PIN verification;
   the card payment terminal receiving verification from the chip as to whether or not the PIN entered by the card owner corresponds to a PIN stored on the chip; and
   on the PIN entered into the card payment terminal by the card owner differing from the PIN stored on the chip, terminating the card payment transaction, and on the PIN entered into the card payment terminal by the card owner corresponding to the PIN stored on the chip, proceeding with the subsequent payment processing steps of the card payment transaction of:
      the card payment terminal thereafter handling the card payment transaction as a card-not-present transaction by generating a payment packet including a card payment terminal identifier, the PAN, the payment amount, the name of the card account owner and the expiry date of the card, and transmitting the payment packet to the processing server over the internet; and
      the processing server processing the payment packet and returning a payment packet response to the card payment terminal.

This is seen as a particularly beneficial method as Chip and PIN security can be used to augment what is essentially thereafter a card-not-present, internet-based transaction. There is therefore the advantage of card-present security but with card-not-present processing flexibility. The method according to the present invention does not require additional chip interaction or communication steps to be carried out subsequent to PIN verification and therefore can be performed using the existing Internet payment processing infrastructure and without having to provide dedicated merchant accounts for each terminal owner.

As the method according to the invention effectively processes the transaction as a card-not-present internet-based transaction, it does not enter into so-called EMV2 steps of card payment processing including opening a communication channel between the Chip on the card and the banking institution. Instead, the card payment transaction is handled as a card-not-present transaction where the details from the magnetic strip the amount to charge and the card payment terminal identifier are used to make the payment packet for transmission over the internet and subsequent processing. This provides a very flexible yet secure method of processing card payment transactions.

This is seen as a particularly suitable way to process the card payment transaction as the method will not be restricted to following EMV2 procedures and will effectively be processed as a card-not-present internet transaction. By not having to follow EMV2 procedures, it will not be necessary for the card payment terminal to have a standard merchant account and for a communication to be set up between the chip and the bank holding the merchant account. Instead, the payment can be treated as an internet transaction and the card payment terminal operator can have a standard bank account for receiving funds from the transaction. This increases the number of merchants able to process card payment transactions.

Due to the fact that the method according to the invention processes the card payment transaction in this manner, one way in which an unscrupulous villain may attempt to circumvent the security of the method would be for the villain to use a card that they know the PIN details of but in which they have changed the details on the magnetic strip. In such a scenario, theoretically the PIN check would be returned as successful however an entirely different account, that represented by the details on the magnetic strip, could be charged for the transaction. By implementing the method according to the invention, the payment transaction will be halted on the PAN of the chip differing from the PAN of the magnetic strip and this type of attack is circumvented. This will obviate the possibility of a criminal presenting a card with a PIN code that is known to them but with alternative account information stored on the magnetic strip. In other words, the PAN on the Chip, which cannot be altered, is compared with the PAN on the magnetic strip and if the two PANs are not the same as expected, the payment will be halted.

In one embodiment of the invention the method comprises the additional step of entering a CVV number of the card into the card payment terminal and in which the payment processing step of generating a payment packet further comprises including the CVV in the payment packet. Providing a CVV will offer greater security to the card payment transaction and further evidence of the card physically being present during the transaction.

In one embodiment of the invention the PAN retrieved from the magnetic strip and the PAN retrieved from the chip are compared by the terminal. The advantage of comparing the PANs on the terminal is that it will be possible to quickly verify the accuracy of the PANs and this will avoid delay in the processing of the card payment transaction.

In one embodiment of the invention the PAN retrieved from the magnetic strip and the PAN retrieved from the chip are transmitted to the processing server for comparison by the processing server.

In one embodiment of the invention the card payment terminal uses the PAN retrieved from the chip in the generation of the payment packet. This is seen as a more secure source of the PAN for generation of the payment packet and further obviates the possibility of fraud.

In one embodiment of the invention the method comprises the initial step of retrieving a card issuing bank identifier from the magnetic strip and determining from the card issuing bank identifier whether or not there should be a chip on the card and in those cases where it is determined from the card issuing bank identifier that there should be no chip on the card:
checking for the presence of a chip on the card, and on detecting the presence of a chip on the card, terminating the card payment transaction, or on failing to detect the presence of a chip:
   using the PAN from the magnetic strip to generate the payment packet and proceeding with the card payment transaction by skipping the steps of:
      retrieving a PAN from the chip;
      comparing the PAN retrieved from the magnetic strip with the PAN retrieved from the chip; and
      the PIN verification steps.

It is envisaged that certain banking institutions may not use Chip and PIN security in which case the method entails checking the unique card issuing bank code to determine whether or not they have Chip and PIN technology. If they do not, the cards of that bank can be used in any event to make a payment using the card payment terminal. It is envisaged that the card payment terminal may provide additional security measures such as presenting a representation of the card on the terminal including a pictorial representation of the card that may be referred to by the card payment terminal operator or by the payment terminal carrying out a check to see if there is a chip present on the card and if there is, alerting the card payment terminal operator that there is in fact a chip present. This will allow them to ensure that it is indeed a card with no chip from that card issuing bank rather than a card with a magnetic strip that has been loaded with that banks details. Similarly, by retrieving the card issuing bank identifier and checking for the presence of a chip, this will facilitate detection of a card that should have a chip but in which no chip is in fact present on the card which is an indicator that the card is fraudulent.

In one embodiment of the invention the processing server communicates with the card payment terminal using protocols such as one of XML and HTML. Effectively, the communications will be over the internet and the method and system operate on the basis of a thin client server based system.

In one embodiment the payment packet is transmitted from the card payment terminal to the processing server using encrypted secure communication protocols such as one of TLS and SSL.

### Detailed Description of the Invention

The invention will now be more clearly understood from the following description of some embodiments thereof given by way of example only with reference to the accompanying drawings, in which:-
Figure 1 is a diagrammatic representation of a system in which the method according to the invention may be performed.
Figure 2 is a perspective view of a card payment terminal for use in the method; and
Figure 3 is a view of the card payment terminal split along a central vertical plane through the middle of the device showing the internal configuration of the slots and readers.

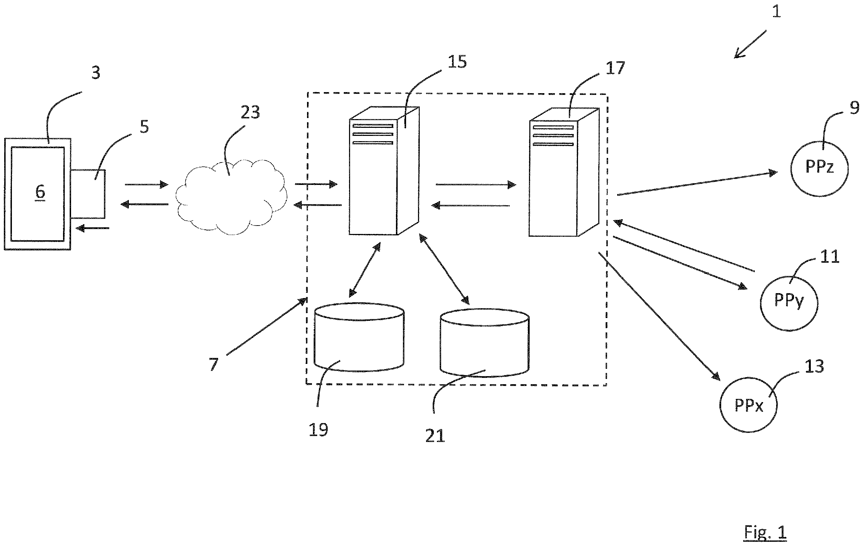

Referring to Figure 1, there is shown a system, indicated generally by the reference numeral 1, comprising a card payment terminal 3 and a card 5 for use in a card payment transaction. The card payment terminal 3 comprises a chip reader (not shown), a magnetic strip reader (not shown) and a user interface 6. The system comprises a processing server sub-system, indicated generally by the reference numeral 7, the constituent parts of which are bounded by a dashed line, and a plurality of payment processors 9, 11 and 13 each of which is associated with a bank card network (not shown). The processing server sub-system 7 further comprises a processing server 15, a processing server routing server 17 and a pair of databases 19, 21. The database 19 stores information relating to the card payment terminals 3 including the merchant's account details relating to the individual card payment terminals 3. The database 21 stores details relating to the card payment transactions such as the amount, the payment beneficiary and the like processed through the individual card payment terminals 3. The processing server 15 has a communications module (not shown) for communicating with the remote card payment terminal 3.

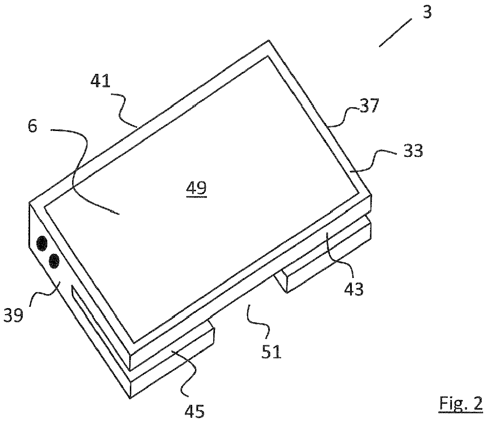

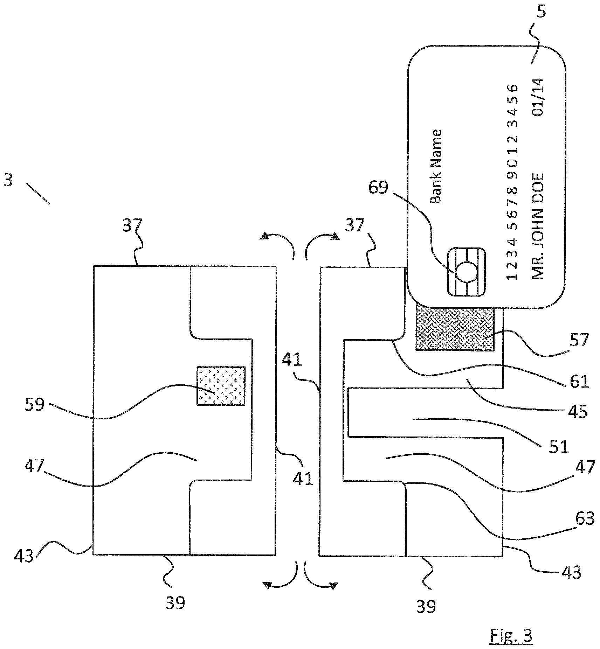

Referring to Figures 2 and 3, there is shown a pair of representations of the card payment terminal 3, comprising a casing having a front side 33, a rear side, a top side 37, a bottom side 39, a left side 41 and a right side 43. A magnetic swipe card slot 45 is formed in the casing on the right side of the casing and extends along the entire length of the side from the top 37 to the bottom 39. A chip reading slot 47 (as illustrated in Figure 3) is also formed in the casing perpendicular to the magnetic strip swipe slot 45. The chip reading slot 47 and the magnetic strip swipe slot 45 are co-planar and share a common slot portion therebetween i.e. that portion of the slots that overlap.

The payment terminal 3 contains components necessary for completing card payments including a processor, an accessible memory including volatile memory and non-volatile memory and a communications module (not shown) for communication with the remote processing server 15. There is further provided a user interface 6, in this case provided by way of a touchscreen 49 on the front of the payment terminal. The touchscreen 49 is capable of displaying payment information and providing a keypad for the insertion of payment information. The communications module is capable of setting up a connection to the internet and the payment terminal effectively comprises a web browser to display a web page on at least portion of the user interface, thereby allowing the payment transaction to be completed not according to the EMV2 specification but instead as if it were an internet based, card-not-present purchase transaction. The method according to the present invention does not require additional chip interaction or communication steps to be carried out subsequent to PIN verification.

The payment terminal comprises a Card Verification Value (CVV) code viewing aperture 51 formed in the rear of the casing coincident with the chip reading slot 47 to permit viewing of the CVV code from a card when the card is fully inserted in the chip reading slot 47. The CVV code viewing aperture extends practically the entire way across the rear of the casing from the right side to a point adjacent to the left side of the casing.

Referring specifically to Figure 3, there is shown a view of the payment processor split along a central vertical plane through the middle of the device showing the internal configuration of the slots 45, 47 in more detail and a pair of readers, namely a magnetic strip reader 57 and a chip reader 59, located internal the payment terminal adjacent to their respective slot. The magnetic strip reader 57 is located in the payment terminal adjacent the top side 37 of the payment terminal. In this position, the magnetic strip reader 57 will be able to read data from a magnetic strip on a card 5 passed through the magnetic strip swipe slot. The magnetic strip reader is positioned to the side of the magnetic strip swipe slot adjacent the rear of the casing. The chip reader 59 is located adjacent the inner end of the chip reading slot 47 and is positioned to the side of the chip reading slot 47 adjacent the front 33 of the casing. In this position, the chip reader 59 will be able to read data from a chip 69 on the card 5 when the card 5 is fully inserted into the chip reader slot 47 and facing forwards in the slot. The above configuration of card payment terminal will be particularly suitable for use in the method according to the invention.

In use, in order to make a card payment transaction, a card holder will pass their card to the operator of the card payment terminal 3. The operator of the card payment terminal 3 will swipe the card 3 in the magnetic strip swipe slot 45 and the Primary Account Number (PAN) including other card details such as the card account holder name and the expiry date of the card will be read from the magnetic strip. Then, the operator of the card payment terminal 3 will insert the card 5 in the chip reading slot 47 and the chip reader 59 will read the PAN from the chip 69. The card payment terminal 3 will then compare the PAN from the magnetic strip with the PAN from the chip 69. If the PAN from the strip is the same as the PAN from the chip, the card payment transaction is allowed to proceed however if the PAN from the strip is different to the PAN from the chip, the card payment transaction is terminated. As an alternative to the payment terminal comparing the PAN from the magnetic strip with the PAN from the chip, the comparison could be carried out on either the processing server or a dedicated processor chip on the terminal itself.

The method further comprises the steps of a card holder entering a PIN into the card payment terminal and the payment terminal submitting the PIN to the chip on the card for comparison with the PIN stored on the card's chip. If the PIN entered into the payment terminal and the PIN on the chip are not identical, the terminal may terminate the card payment request. Once the PAN and the PIN have been verified, the card payment transaction will proceed. In a preferred embodiment, this will entail the operator of the device entering the CVV code that appears on the rear of the card into the terminal and the terminal then combining the CVV code with the verified PAN from either the Chip or magnetic strip, along with the card account owner name, the expiry date of the card, the card payment terminal identifier and the amount to be charged together into a payment packet and transmitting the payment packet to the processing server 15.

The payment packet is preferably built in parts or in whole by the payment terminal in response to requests passed to it by the processing server and the processing server may require more or less information than that outlined above. For example, the processing server may obtain the location of the terminal and the card being charged. For magnetic strip only cards, the processing server may store the signature given by the user on the touch screen, however the signature itself may not be used in the actual payment processing.

The processing server 15 thereafter saves various components of the payment packet in databases 19, 21 and passes the payment packet to the processing server routing server 17 which will select the most appropriate payment processor 9, 11, 13 to send the payment request to. The payment processors are each connected to a card payment network (not shown). The processing server routing server 17 will also modify the payment packet into a format suitable for that payment processor and the card payment network associated therewith if necessary.

It can be seen from the foregoing that due to the fact that the CVV , the PAN and the other card details contained in the payment request are commonly entered by a card holder making an Internet / Web based purchase, the payment request can be treated as an internet, card-not-present transaction. However, it can be seen that the method according to the invention advantageously obtains card-present verification through PIN verification prior to transmitting the payment packet. Therefore, the method according to the present invention has the security of a card-present transaction verified to a very high standard but with the flexibility consistent with that of an internet based transaction. The payment request can be passed into any number of payment processors 9, 11, 13 that will process the payment. It is clear from the foregoing description of the invention that dedicated merchant accounts are not necessary for the implementation of the present invention however if desired the present invention can still be used in conjunction with a dedicated merchant account and is not limited to use with standard accounts.

It will be understood that the method according to the present invention will be performed largely in software and therefore the present invention extends also to computer programs, on or in a carrier, comprising program instructions for causing a computer to carry out steps of the method. The computer program may be in source code format, object code format or a format intermediate source code and object code. The computer program may be stored on or in a carrier, in other words a computer program product, including any computer readable medium, including but not limited to a floppy disc, a CD, a DVD, a memory stick, a tape, a RAM, a ROM, a PROM, an EPROM or a hardware circuit. In certain circumstances, a transmissible carrier such as a carrier signal when transmitted either wirelessly and/or through wire and/or cable could carry the computer program in which cases the wire and/or cable constitute the carrier.

It will be further understood that the present invention may be performed on two, three or more machines with certain parts of the computer-implemented method being performed by one machine and other parts of the computer-implemented method being performed by another device. The devices may be part of a LAN, WAN or could be connected together over a communications network including but not limited to the internet. Many of the method steps could be performed "in the cloud", meaning that remotely located processing power may be utilised to process certain method steps of the present invention. Accordingly, it will be understood that many of the method steps may be performed remotely, by which it is meant that the method steps could be performed either on a separate machine in the same locality or jurisdiction or indeed on a separate machine or machines in one or several remote jurisdictions. For example, the card payment terminal and the processing server may be in different jurisdictions. The card payment terminal, the processing server and a bank card network may all be in different jurisdictions or where one or more parts of the system are located in the same jurisdiction with other parts in another jurisdiction. The present invention and claims are intended to also cover those instances where the method is performed across two or more machines or pieces of apparatus located in one or more jurisdictions and those situations where the parts of the system are spread out over one or more jurisdictions.

Throughout this specification, the term Card Verification Value (CVV) code has been used however it will be understood that many different terms and acronyms are used to describe the same code, including, but not limited to CVV2, the Card Verification Code (CVC / CVC2), the Card Code Verification (CCV), the Card Security Code (CSC), the Card Verification Data (CVD), the Card Verification Value Code (CVVC) or simply the Verification Code (V-Code). The CVV code is a code not stored on the magnetic strip but instead is printed on the card itself. For Mastercard ®, Visa ® and some other Credit and Debit cards, presently, the CVV is a three digit code printed on the rear of the card on the signature strip. Other card providers, such as American Express ®, presently print a four digit CVV code on the front right hand side of the card.

Throughout the specification, reference is made to the EMV1 and EMV2 specifications. It will be understood that these references and requirements relate to the EMV1 and EMV2 specifications and requirements at the date of filing of the application in suit or date of priority if claimed. Finally, reference is made to banking institutions in the specification and this is intended to also cover partners of the banking institutions that provide card payment processing services to the banking institutions.

In this specification the terms "include, includes, included and including" and the terms "comprise, comprises, comprised and comprising" are all deemed totally interchangeable and should be afforded the widest possible interpretation.

The invention is in no way limited to the embodiment hereinbefore described but may be varied in both construction and detail within the scope of the appended claims.

## Claims

1. A method of executing a secure card payment transaction in a system comprising a card payment terminal and a remote processing server,
the card payment terminal comprising a magnetic strip swipe slot and a magnetic strip reader, a chip reading slot and a chip reader, a processor, an accessible memory, a communications module for communications with the remote processing server and a user interface capable of receiving user and operator entered data;
the processing server comprising a processor, an accessible memory and a communications module for communications with the remote card payment terminal; the method comprising the preliminary steps of:
swiping a card to be used in the card payment transaction in the magnetic strip swipe slot and retrieving a primary account number (PAN) from the magnetic strip;
entering the card to be used in the card payment transaction in the chip reading slot and retrieving a PAN from the chip;
comparing the PAN retrieved from the magnetic strip with the PAN retrieved from the chip; and
on the PAN retrieved from the magnetic strip differing from the PAN retrieved from the chip, terminating the card payment transaction, and on the PAN retrieved from the magnetic strip corresponding to the PAN retrieved from the chip, proceeding with the following PIN verification steps of the card payment transaction:
the card owner entering a Personal Identification Number (PIN) into the card payment terminal, the card payment terminal passing the entered PIN to the chip on the card for PIN verification;
the card payment terminal receiving verification from the chip as to whether or not the PIN entered by the card owner corresponds to a PIN stored on the chip; and
on the PIN entered into the card payment terminal by the card owner differing from the PIN stored on the chip, terminating the card payment transaction, and on the PIN entered into the card payment terminal by the card owner corresponding to the PIN stored on the chip, proceeding with the subsequent payment processing steps of the card payment transaction of:
the card payment terminal thereafter handling the card payment transaction as a card-not-present transaction by generating a payment packet including a card payment terminal identifier, the PAN, the payment amount, the name of the card account owner and the expiry date of the card,
and transmitting the payment packet to the processing server over the internet; and
the processing server processing the payment packet and
returning a payment packet response to the card payment terminal.

2. A method as claimed in claim 1 comprising the additional step of entering a CVV number of the card into the card payment terminal and in which the payment processing step of generating a payment packet further comprises including the CVV in the payment packet.

3. A method as claimed in claim 1 or 2 in which the PAN retrieved from the magnetic strip and the PAN retrieved from the chip are compared by the terminal.

4. A method as claimed in claim 1 or 2 in which the PAN retrieved from the magnetic strip and the PAN retrieved from the chip are transmitted to the processing server for comparison by the processing server.

5. A method as claimed in any preceding claim in which the card payment terminal uses the PAN retrieved from the chip in the generation of the payment packet.

6. A method as claimed in claim 1 or 2 in which the method comprises the initial step of retrieving a card issuing bank identifier from the magnetic strip and determining from the card issuing bank identifier whether or not there should be a chip on the card and in those cases where it is determined from the card issuing bank identifier that there should be no chip on the card:
checking for the presence of a chip on the card, and on detecting the presence of a chip on the card, terminating the card payment transaction, or on failing to detect the presence of a chip:
using the PAN from the magnetic strip to generate the payment packet and proceeding with the card payment transaction by skipping the steps of:
retrieving a PAN from the chip;
comparing the PAN retrieved from the magnetic strip with the PAN retrieved from the chip; and
the PIN verification steps.

7. A method as claimed in any preceding claim in which the processing server communicates with the card payment terminal using protocols such as one of XML and HTML.

8. A method as claimed in any preceding claim in which the payment packet is transmitted from the card payment terminal to the processing server using encrypted secure communication protocols such as one of TLS and SSL.
